# EUROPEAN PATENT SPECIFICATION

(11) **EP 2 961 796 B1**
(45) Date of publication and mention of the grant of the patent: **13.02.2019**
(21) Application number: 14710483.0
(22) Date of filing: 28.02.2014
(51) Int. Cl.: C08L 23/14, C08L 23/12, C08K 5/00

(54) **A BLEND COMPOSITION SUITABLE FOR INJECTION MOLDING APPLICATIONS**
MISCHUNGSZUSAMMENSETZUNG FÜR SPRITZGUSSANWENDUNGEN
COMPOSITION DE MÉLANGE APPROPRIÉE POUR DES APPLICATIONS DE MOULAGE PAR INJECTION

(30) Priority: 28.02.2013 US 201361770717 P; 25.09.2013 US 201361882095 P
(43) Date of publication of application: 06.01.2016
(73) Proprietor: Dow Global Technologies LLC, Midland, MI 48674 (US)
(72) Inventor: WEAVER, Laura B., Lake Jackson, TX 77566 (US); MUNRO, Jeffrey C., Bellaire, TX 77401 (US); WALTON, Kim L., Lake Jackson, TX 77566 (US); TUBERQUIA, Juan C., Freeport, TX 77541 (US); BAWISKAR, Santosh S., Sugar Land, TX 77479 (US)
(74) Representative: Boult Wade Tennant LLP
(86) International application number: PCT/US2014/019259
(87) International publication number: WO 2014/134399

(56) References cited:
- US-A1- 2004 260 001

## Description

### Field of Invention

The instant invention relates to a blend composition suitable for injection molding applications.

### Background of the Invention

Clear flexible polyvinyl chloride (PVC) is typically used in sporting goods, housewares, and fashion footwear and consumers products. However, PVC requires plasticizers for processability and softness. Many PVC plasticizers are phthalate based materials, which are increasingly under scrutiny in skin contact application.

Therefore, there is a need for blend composition that reduces the need for phthalate plasticizers and provides acceptable haze properties.

US 2004/0260001 relates to articles formed from plasticized polyolefin compositions comprising one or more polyolefins and one or more non-functionalized plasticizers.

### Summary of the Invention

In the first aspect of the present invention, there is provided the blend composition of claim 1. In a further aspect of the present invention, there is provided the process of claim 2.

The instant invention provides a blend composition suitable for injection molded articles.

There is provided a blend composition suitable for injection molding applications comprising: (a) from 55 to 65 percent by weight of a propylene/a-olefin interpolymer composition having a DSC melting point (second heat) of less than 80 °C; (b) from 5 to 25 percent by weight of a homopolymer polypropylene, a random copolymer polypropylene, clarified random copolymer polypropylene, and combination thereof, wherein the homopolymer polypropylene, random copolymer polypropylene and clarified random copolymer polypropylene have a DSC melting point temperature of from greater than 120 °C; and (c) from 5 to 35 percent by weight of a plasticizing agent; wherein said blend composition has a total haze of less than 25 percent wherein haze is measured on 0.32 cm (0.125") thick injection molded plaques according to ASTM D-1003; wherein said blend composition further comprises a mold release agent.

There is provided a process for making an injection molded article comprising the steps of: (a) selecting from 55 to 65 percent by weight of a propylene/a-olefin interpolymer composition having a DSC melting point (second heat) of less than 80 °C; (b) selecting from 5 to 25 percent by weight of a homopolymer polypropylene, a random copolymer polypropylene, clarified random copolymer polypropylene, and combination thereof, wherein the homopolymer polypropylene, random copolymer polypropylene and clarified random copolymer polypropylene have a DSC melting point temperature of from greater than 120 °C; (c) selecting from 5 to 35 percent by weight of a plasticizing agent; selecting a mold release agent (d) contacting said a-c components and said mold release agent in the presence of heat; (e) thereby forming a blend composition, wherein said blend composition has a total haze of less than 25 percent wherein haze is measured on 0.32 cm (0.125") thick injection molded plaques according to ASTM D-1003; wherein said blend composition further comprises a mold release agent; and (f) forming said blend composition into a molded article.

There is provided a transparent injection molded article, e.g. consumer goods such shoes, e.g. jelly shoes, boots, housewares, grips, and the like.

### Detailed Description of the Invention

The instant invention provides a blend composition suitable for injection molded articles. The blend composition suitable for injection molding applications according to the present invention comprises: (a) from 55 to 65, further from 55 to 65, further from 60 to 65 percent by weight of a propylene/a-olefin interpolymer composition having a DSC melting point (second heat) of less than 80 °C; (b) from 5 to 25, further from 7 to 20, further from 8 to 15 percent by weight of a homopolymer polypropylene, a random copolymer polypropylene, clarified random copolymer polypropylene, and combination thereof, wherein the homopolymer polypropylene, random copolymer polypropylene and clarified random copolymer polypropylene have a DSC melting point temperature of from greater than 120 °C; and (c) from 5 to 35, percent by weight of a plasticizing agent; wherein said blend composition has a total haze of less than 25 percent, further less than, or equal to, 23 percent, wherein haze is measured on 0.32 cm (0.125") thick injection molded plaques according to ASTM D-1003; wherein said blend composition further comprises a mold release agent. Each weight percent is based on the weight of the blend composition.

The blend composition can have a Hardness, Shore A in the range of from 50 to 90, for example from 50 to 75. The blend composition can also have a melt flow rate, measured at 230°C and 2.16 kg, in the range of from 8 to 70 g/10 minutes, for example from 10 to 25 g/10 minutes. The blend composition can also have a fingerprint, after aging at 70°C for one week, of 1 or 2. The blend composition can also have a haze of less than 25 %, after said blend composition being aged in an oven at 55°C, or above, for at least 5 consecutive days.

In one embodiment, the blend composition comprises from 10 to 35, further from 10 to 30, percent by weight, of the plasticizing agent.

In one embodiment, the blend composition comprises from 15 to 35, further from 15 to 30, percent by weight, of the plasticizing agent.

In one embodiment, the blend composition comprises from 20 to 35, further from 20 to 30, percent by weight, of the plasticizing agent.

In one embodiment, the blend composition comprises greater than, or equal to 96 weight percent of components (a) and (b), based on the total weight of polymer components in the blend composition. In a further embodiment, the blend composition comprises greater than, or equal to 97 weight percent of components (a) and (b), based on the total weight of polymer components in the blend composition. In a further embodiment, the blend composition comprises greater than, or equal to 98 weight percent of components (a) and (b), based on the total weight of polymer components in the blend composition.

In one embodiment, the blend composition has a density from 0.85 to 0.91 g/cc, further from 0.86 to 0.90 g/cc, further from 0.87 to 0.89 g/cc (1 cc = 1 cm³).

In one embodiment, the blend composition has a melt index (230°C; 2.16 kg) from 5 to 100 g/10 min, further from 10 to 90 g/10 min, further from 18 to 80 g/10 min.

In one embodiment, the blend composition has a Tc greater than 80°C, further greater than, or equal to, 81°C, as determined by DSC.

In one embodiment, the blend composition does not comprise a filler.

In one embodiment, the blend composition does not comprise an ethylene/alpha-olefin copolymer, where the alpha-olefin is a C3 to C20 alpha-olefin. An ethylene/alpha-olefin copolymer comprises a majority amount of polymerized ethylene, based on the weight of the polymer, and an alpha-olefin, as the only monomer types. In a further embodiment, the blend composition does not comprise an ethylene/alpha-olefin interpolymer, where the alpha-olefin is a C3 to C20 alpha-olefin. An ethylene/alpha-olefin inerpolymer comprises a majority amount of polymerized ethylene, based on the weight of the polymer, and an alpha-olefin. In a further embodiment, the blend composition does not comprise an ethylene-based polymer. An ethylene-based polymer comprises a majority amount of polymerized ethylene, based on the weight of the polymer.

In one embodiment, the blend composition does not comprise an ethylene/alpha-olefin copolymer, where the alpha-olefin is a C4 to C20 alpha-olefin. An ethylene/alpha-olefin copolymer comprises a majority amount of polymerized ethylene, based on the weight of the polymer, and an alpha-olefin, as the only monomer types. In a further embodiment, the blend composition does not comprise an ethylene/alpha-olefin interpolymer, where the alpha-olefin is a C4 to C20 alpha-olefin. An ethylene/alpha-olefin inerpolymer comprises a majority amount of polymerized ethylene, based on the weight of the polymer, and an alpha-olefin. In a further embodiment, the blend composition does not comprise an ethylene-based polymer. An ethylene-based polymer comprises a majority amount of polymerized ethylene, based on the weight of the polymer.

The blend composition may comprise a combination of two or more embodiments or features as described herein.

### Propylene/α-olefin interpolymer composition (PBE)

The blend composition suitable for injection molded article according to the present invention comprises from 55 to 65 percent by weight of a propylene/α-olefin interpolymer composition (PBE). The propylene/α-olefin interpolymer composition comprises a propylene/alpha-olefin copolymer, and may optionally further comprise one or more polymers, e.g. a random copolymer polypropylene (RCP). In one particular embodiment, the propylene/alpha-olefin copolymer is characterized as having substantially isotactic propylene sequences. "Substantially isotactic propylene sequences" means that the sequences have an isotactic triad (mm) measured by ¹³C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refers to the isotactic sequence in terms of a triad unit in the copolymer molecular chain determined by ¹³C NMR spectra.

The propylene/alpha-olefin copolymer may have a melt flow rate in the range of from 0.1 to 25 g/10 minutes, measured in accordance with ASTM D-1238 (at 230°C /2.16 Kg). All individual values and subranges from 0.1 to 25 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 25 g/10 minutes, 20 g/10 minutes, 18 g/10 minutes, 15 g/10 minutes, 10 g/10 minutes, 8 g/10 minutes, or 5 g/10 minutes. For example, the propylene/alpha-olefin copolymer may have a melt flow rate in the range of from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes; or from 0.1 to 2 g/10 minutes.

The propylene/alpha-olefin copolymer has a crystallinity in the range of from at least 1 percent by weight (a heat of fusion of at least 2 Joules/gram) to 20 percent by weight (a heat of fusion of less than 33 Joules/gram). All individual values and subranges from 1 percent by weight (a heat of fusion of at least 2 Joules/gram) to 20 percent by weight (a heat of fusion of less than 33 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 20 percent by weight (a heat of fusion of less than 33 Joules/gram), 16 percent by weight (a heat of fusion of less than 26 Joules/gram), 12 percent by weight (a heat of fusion of less than 20 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 20 percent by weight (a heat of fusion of less than 33 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via Differential scanning calorimetry (DSC) method.

The propylene/alpha-olefin copolymer has a DSC melting point (second heat) of less than 80°C, for example, from 25 to 75°C, or in the alternative, between 40 and 70°C.

The propylene/alpha-olefin copolymer comprises units derived from propylene and polymeric units derived from one or more alpha-olefin comonomers. Exemplary comonomers utilized to manufacture the propylene/alpha-olefin copolymer are C₂, and C₄ to C₁₀ alpha-olefins; for example, C₂, C₄, C₆ and C₈ alpha-olefins.

The propylene/alpha-olefin copolymer comprises from 9 to 40 percent by weight of units derived from one or more alpha-olefin comonomers. All individual values and subranges from 9 to 40 weight percent are included herein and disclosed herein; for example, the weight percent of units derived from one or more alpha-olefin comonomers can be from a lower limit of 9, 10, 11, 12 or 13 weight percent to an upper limit of 40, 35, 30, 27, 20, or 15 weight percent. For example, the propylene/alpha-olefin copolymer comprises from 9 to 35 percent by weight of units derived from one or more alpha-olefin comonomers; or in the alternative, the propylene/alpha-olefin copolymer comprises from 10 to 25 percent by weight of units derived from one or more alpha-olefin comonomers; or in the alternative, the propylene/alpha-olefin copolymer comprises from 10 to 20 percent by weight of units derived from one or more alpha-olefin comonomers; or in the alternative, the propylene/alpha-olefin copolymer comprises from 10 to 15 percent by weight of units derived from one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™.

In one embodiment, the propylene/alpha-olefin copolymers are further characterized as comprising (A) between 60 and less than 91, preferably between 80 and 90 and more preferably between 85 and 90, weight percent units derived from propylene, and (B) between 9 and 40,
preferably between 10 and 20, and more preferably between 10 and 15, weight percent units derived from at least one of ethylene and/or a C₄₋₁₀ α-olefin; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein with regard to propylene/alpha-olefin copolymers, refers to a chain length of at least one (1) carbon more than a short chain branch, and short chain branch, as used herein with regard to propylene/alpha-olefin copolymers, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in detail in the U.S. Provisional Patent Application No. US 988999P and International Patent Application No. WO 2009/067337.

### Other polymeric components

The blend composition suitable for injection molding applications according to the present invention comprises from 5 to 25 percent by weight of a homopolymer polypropylene, a random copolymer polypropylene, clarified random copolymer polypropylene, and combination thereof, for example from 10 to 20 weight percent. Such homopolymer polypropylenes, a random copolymer polypropylenes, and clarified random copolymer polypropylenes have a DSC melting point temperature of from greater than 120°C, for example from 140°C to 165°C.

### Plasticizing agent(s)

The blend composition suitable for injection molded articles according to the present invention comprises from 5 to 35 percent by weight of one or more plasticizing agent, for example from 10 to 30 weight percent, or in the alternative from 20 to 30 weight percent.

The plasticizing agent can be an oil. The oil can be an aromatic oil, a mineral oil, a naphthenic oil, a paraffinic oil, a triglyceride-based vegetable oil such as castor oil, a synthetic hydrocarbon oil such as polypropylene oil, a silicone oil, or any combination thereof.

White mineral oils are preferred. The oil is a hydrocarbon oil, often referred to as a white mineral oil, or alternatively as a polymer or a processing oil. These oils are chemically defined as hydrotreated heavy paraffinic distillates or a white mineral oil. The oils of most utility have little to no aromatic content, from 50 to 90% paraffinic content, and from 10 to 50% naphthenic content, and most preferably from 65 to 75% paraffinic content and from 25 to 35% naphthenic content. Such plasticizing agent can have a viscosity in the range of from 12 to 70, for example from 15 to 55, cSt at 40°C, measured according to ASTM D-445, and further is an oil.

Such plasticizing agents include, but are not limited to, mineral oils such as hydrocarbon mineral oils, e.g. PARALUX 6001R, available from ChevronTexaco; HYDROBRITE 550, available from Sonneborn, Inc. LP 200, available from Sonneborn; INDOPOL H-15, available from INEOS, RISELLA X 420, available from Shell Deutschland Oil GmbH, PLASTHALL 100, available from The HallStar Company.

The mineral oil can be a white mineral oil having a refractive index in the range of from 1.45 to 1.49, measured according to ASTM-D 1218, having a paraffinic carbon content in the range of 50 to 90 percent, measured according to ASTM-D 3238, having a naphthenic carbon content in the range of 10 to 50 percent, measured according to ASTM-D 3238, and/or a kinematic viscosity at 40°C in the range of from 15 to 400 cSt, measured according to ASTM-D 445.

In one embodiment, the plasticizing agent has a viscosity in the range of from 12 to 70 mm²/s (cSt) at 40°C, measured according to ASTM D-445.

### Additional components

The blend composition suitable for injection molding applications according to the present invention may further comprise one or more additives. Such additives include, but are not limited to, antistatic agents, color enhancers, dyes, lubricants, fillers, pigments, primary antioxidants, secondary antioxidants, processing aids, UV stabilizers, mold release agents, and combinations thereof. The blend composition suitable for injection molded article according to the present invention may contain any amounts of additives. The blend composition may comprise from about 0 to about 25 percent by the combined weight of such additives, based on the weight of the blend composition and the one or more additives.

Mold release agents can comprise Oleamide such as 9-Octadecenamide. The Oleamide can have the following molecular structure:

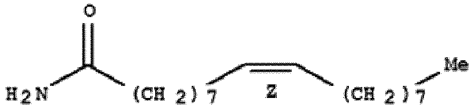

### Process for making the blend composition

The blend composition of the present invention can be prepared via any conventional melt blending process such as extrusion via an extruder, e.g. single or twin screw extruder. The
PBE; one or more additional polymeric components selected from the group consisting of a homopolymer polypropylene, a random copolymer polypropylene, clarified random copolymer polypropylene, and combination thereof; one or more plasticizing agents; a mold release agent; and optionally one or more additives may be melt blended in any order via one or more extruders to form a uniform blend composition. In the alternative, the PBE; one or more additional polymeric components selected from the group consisting of a homopolymer polypropylene, a random copolymer polypropylene, clarified random copolymer polypropylene, and combination thereof; one or more plasticizing agents; and optionally one or more additives may be dry blended in any order, and subsequently extruded to form an injection molded article.

In one embodiment, the mold release agent comprises an oleamide. In one embodiment, the plasticizing agent has a viscosity in the range of from 12 to 70 mm²/s (cSt) at 40°C, measured according to ASTM D-445.

### End-use applications

The inventive blend compositions of the present invention can be formed into transparent injection molded articles, e.g., consumer goods such shoes, e.g. jelly shoes, boots, housewares, grips, and the like, via for example, injection molding process.

In the injection molding process, the inventive blend composition is fed into an extruder via a hopper. The extruder conveys, heats, melts, and pressurizes the inventive blend composition to a form a molten stream. The molten stream is forced out of the extruder under pressure through a nozzle into a relatively cool mold held closed thereby filling the mold. The melt cools and hardens until fully set-up. The mold then opens and the molded article, e.g., shoe, is removed.

In one embodiment, there is provided an article comprising the blend composition as described herein, having a haze of less than 25% after said article being aged in an oven at 55 °C, or above, for at least 5 consecutive days.

### Examples

The following examples illustrate the present invention but are not intended to limit the scope of the invention.

### Blend Composition Components:

DE 2400.05 is a propylene/ethylene copolymer having a target melt flow rate (at 230°C, 2.16 kg) of 2 g/10 minutes, a target density of 0.863 g/cc.

VERSIFY 2200 is a propylene/ethylene copolymer having a target melt flow rate (at 230°C, 2.16 kg) of 2 g/10 minutes, a DSC melting peak of approximately 82°C, a target density of 0.876 g/cc.

VERSIFY 2300 is a propylene/ethylene copolymer having a target melt flow rate (at 230°C, 2.16 kg) of 2 g/10 minutes, a DSC melting peak of approximately 66°C, a target density of 0.866 g/cc.

VERSIFY 4301 is a propylene/ethylene copolymer having a target melt flow rate (at 230°C, 2.16 kg) of 25 g/10 minutes, a DSC melting peak of approximately 64°C, a target density of 0.866 g/cc.

BRASKEM PP R7021-50RNA is a random-copolymer polypropylene having a target melt flow rate (at 230°C, 2.16 kg) of 50 g/10 minutes.

BRASKEM PP 5D49 is a homopolymer polypropylene having a target melt flow rate (at 230°C, 2.16 kg) of 38 g/10 minutes.

BRASKEM PP H110-02N is a homopolmer polypropylene having a target melt flow rate (at 230°C, 2.16 kg) of 2 g/10 min.

DOW HPDE DMDA-8965 NT 7 is high-density polyethylene having a target melt flow rate (at 190°C, 2.16 kg) of 66 g/10 minutes a target density of 0.954 g/cc. PARALUX 6001R is a process oil having a target viscosity of 116 cSt at 40°C (ASTM D-445), a refractive index at 20°C (ASTM D1218) of 1.4781.

AM Fine AX-71 is an alkyl phosphate-based release agent having an average molecular weight of 490, and a melting point temperature in the range of from 70 to 75°C, which is commercially available from Amfine Chemical Corporation.

LP-200, which is commercially available from Sonneborn, is a white mineral oil having a Specific Gravity in the range of from 0.875 to 0.895 at 60°F/60°F measured via ASTM D-4052, and a Visc. SAbolt in the range of from 190 to 210 SUS at 100°F measured via ASTM D-2161 (estimated 41-45 cSt at 40°C (ASTM D-445)).

CRODAMIDE VRX amides, C18, unsaturated commercially available from Croda. INDOPOL H-15, which is commercially available from INEOS, is polybutene(isobutylene/butene copolymer in liquid form, CAS No. 9003-29-6. RISELLA X 420, which is commercially available from Shell Deutschland Oil GmbH, is a process oil, REACH Registration No. 01-0000020163-82-0001.

PLASTHALL 100, which is commercially available from The HallStar Company, is Isooctyl Tallate in liquid form, CAS No. 68333-78-8.

### Inventive Blend Composition 6-7, Comparative Blend Compositions 1-6 and 8 and Blend Compositions 1-5

Inventive Blend Composition 6-7, Comparative Blend Compositions 1-6 and 8 and Blend Compositions 1-5 were prepared based on formulation components listed in Tables 1A and 1 B, according to the following process. Formulation components reported in Tables 1A and 1B were melt-blended via a twin-screw extruder, ZSK 30 mm extruder, equipped with a water bath and strand cutter, using conditions shown in Table 2.

**Table 1A**

| | **Blend Comp 1*** | **Blend Comp 2*** | **Blend Comp 3*** | **Blend Comp 4*** | **Blend Comp 5*** | **Inventive Blend Comp 6** | **Inventive Blend Comp 7** | **Comparative Blend Comp 8** |
|---|---|---|---|---|---|---|---|---|
| DE2400.05 | 65 W% | 64.7 W% | 60 W% | --- | 65 W% | 60W% | 65.4 W% | 54.26 W% |
| VERSIFY 2200 | --- | --- | --- | --- | --- | --- | --- | |
| VERSIFY 4301 | --- | --- | --- | 65 W% | --- | --- | | |
| BRASKEM PP R7021-50RNA (rcPP) | 10 W% | 10 W% | 10 W% | 10 W% | --- | 10 W% | 10.89W% | 10.69 W% |
| BRASKEM PP 5D49 (hPP) | --- | --- | --- | --- | 10 W% | --- | --- | |
| DOW HPDE DMDA-8965 NT 7 | --- | --- | --- | --- | --- | --- | --- | |
| PARALUX 6001R oil | 25 W% | 25 W% | 30 W% | 25 W% | 25 W% | --- | --- | 35 W% |
| AM Fine AX-71 | --- | 0.3 W% | --- | --- | --- | --- | | |
| LP-200 | --- | --- | --- | --- | --- | 30 W% | 20.9W% | |
| CRODAMIDE VRX | --- | --- | --- | --- | --- | 0.05 W% | 0.11W% | 0.05 W% |
| INDOPOL H-15 (PIB) | --- | --- | --- | --- | --- | --- | | |
| SIPERNAT 500LS | --- | --- | --- | --- | --- | --- | 2.7W% | |

| | | | | | | | | |
|---|---|---|---|---|---|---|---|---|
| *This example is outside the scope of the currently claimed invention | | | | | | | | |

**Table 1B**

| | **Comparative Blend Comp 1** | **Comparative Blend Comp 2** | **Comparative Blend Comp 3** | **Comparative Blend Comp 4** | **Comparative Blend Comp 5** | **Comparative Blend Comp 6** |
|---|---|---|---|---|---|---|
| DE2400.05 | --- | 65 W% | 67.2 | 67.2 | 90 | 48.58 |
| VERSIFY 2200 | 65 W% | --- | --- | --- | | |
| VERSIFY 4301 | --- | --- | --- | --- | | |
| BRASKEM PP R7021-50RNA (rcPP) | 10 W% | --- | 11.2 | 11.2 | | 11.37 |
| BRASKEM PP 5D49 (hPP) | --- | --- | --- | --- | | |
| DOW HPDE DMDA-8965 NT 7 | --- | 10 W% | --- | --- | | |
| PARALUX 6001R oil | 25 W% | 25 W% | --- | --- | | |
| AM FINE AX-71 | --- | 0.3 W% | --- | --- | 0.05 | |
| LP-200 | --- | --- | 21.5 | 8.1 | | 40 |
| CRODAMIDE VRX | --- | --- | 0.11 | 0.11 | | 0.05 |
| INDOPOL H-15 (PIB) | --- | --- | --- | 13.4 | | |
| SIPERNAT 500LS | --- | --- | --- | --- | | |
| H110-02 PP (2 MFR) | --- | --- | --- | --- | 9.95 | |

**Table 2**

| | |
|---|---|
| Zone 1 Temp (°C) | 110 |
| Zone 2 Temp (°C) | 140 |
| Zone 3 Temp (°C) | 140 |
| Zone 4 Temp (°C) | 140 |
| Zone 5 Temp (°C) | 140 |
| Zone 6 Temp (°C) | 150 |
| Screw Speed (rpm) | 225 |
| Water Bath Temp (°C) | ∼5 |
| Total Feed Rate (lbs/hr) | 25 |

Inventive Blend Composition 6-7, Comparative Blend Compositions 1-6 and 8 and Blend Compositions 1-5 were tested for their properties, and the results are reported in Tables 3A and 3B.

**Table 3A**

| | **Blend Comp 1*** | **Blend Comp 2*** | **Blend Comp 3*** | **Blend Comp 4*** | **Blend Comp 5*** | **Inventive Blend Comp 6** | **Inventive Blend Comp 7** | **Comparative Blend Comp 8** |
|---|---|---|---|---|---|---|---|---|
| Density, g/cc | 0.87 | 0.87 | 0.87 | 0.87 | 0.87 | 0.87 | 0.89 | 0.88 |
| T_{c} by DSC, °C | 85 | 77 | 81 | 85 | 92 | 84 | 92 | 84 |
| ΔHₘ by DSC, J/g | 28.2 | 27.3 | 24.9 | 32.6 | 30.1 | 25.1 | 17.5 | 24.3 |
| I2 at 230°C, 2.16 kg, dg/min | 10.6 | 10.4 | 18.1 | 67.9 | 10.2 | 28 | 10 | 43 |

| | | | | | | | | |
|---|---|---|---|---|---|---|---|---|
| *This example is outside the scope of the currently claimed invention | | | | | | | | |

**Table 3B**

| | **Comparative Blend Comp 1** | **Comparative Blend Comp 2** | **Comparative Blend Comp 3** | **Comparative Blend Comp 4** | **Comparative Blend Comp 5** | **Comparative Blend Comp 6** |
|---|---|---|---|---|---|---|
| Density, g/cc | 0.88 | 0.87 | 0.87 | 0.87 | --- | 0.88 |
| T_{c} by DSC, °C | 77 | 106 | 88 | 88 | 85 | 86 |
| ΔHₘ by DSC, J/g | 33 | 36.9 | 17.8 | 17.8 | 17.8 | 22.8 |
| 12 at 230°C, 2.16 kg, dg/min | 9.7 | 11.1 | 13 | 12 | 2.9 | 77.8 |

As shown in Table 3A, the inventive blend compositions have sufficiently high I2 and sufficiently high Tc for good processability.

### Inventive Injection Molded Articles (IIMA) 6-7, Comparative Injection Molded Articles (CIMA) 1-6 and 8 and Injection Molded Articles (IMA) 1-5

Inventive Blend Composition 6-7, Comparative Blend Compositions 1-6 and 8 and Blend Compositions 1-5 were injection molded into IIMA 6-7, CIMA 1-6, and IMA 1-5, i.e. plaques (4x6x0.125"), on a Krauss Maffei KM 110-390/390 CL Injection Molding Machine, equipped with a single shot mold base using conditions listed in Table 4.

**Table 4**

| | |
|---|---|
| Hopper Zone Temp (°C) | 40 |
| Zone 1 Temperature (°C) | 121 |
| Zone 2 Temperature (°C) | 175 |
| Zone 3 Temperature (°C) | 204 |
| Zone 4 Temperature (°C) | 204 |
| Zone 5 Temperature (°C) | 204 |
| Nozzle Temperature (°C) | 200 |
| Mold Temperature (°C) | 18 |
| Extruder Speed (rpm) | 150 |
| Extruder Backpressure (bar) | 15 |
| Dosage (ccm) | 75 |
| Injection Speed (ccm/s) | 40 |
| Injection Pressure (bar) | 2000 |
| Switch Over Position (ccm) | 15 |
| Hold Pressure (bar) | 250 |
| Hold Time (s) | 30 |
| Cool Time (s) | 30 |

IIMA 6-7, CIMA 1-6 and 8 and IMA 1-5 were tested for their properties, and the results are reported in Table 5A and 5B.

**Table 5A**

| | IMA1 | IMA2 | IM3 | IMA4 | IMA5 | IIMA6 | IIMA7 | CIMA8 |
|---|---|---|---|---|---|---|---|---|
| Sh. A Hardness, 10 sec | 68 | 68 | 63 | 75 | 68 | 61 | 72.6 | 56 |
| Haze, % | 18.4 | 16.3 | 18.8 | 21.8 | 18.3 | 22.8 | 20 | 26 |
| Haze after aging 55°C for five days | 32.9 | 31.1 | 34.7 | 42.1 | --- | 20.6 | 20.1 | 25 |
| TMA, -1000 micron, °C | 101 | 98 | 102 | 82 | 116 | 101 | 112 | 98 |
| Fingerprint | 2 | 2 | 2 | 1 | 2 | --- | --- | --- |
| Tensile Strength, MPa | 6 | 6.9 | 6.2 | 9.7 | 6.9 | 5 | 9.3 | 4.5 |
| Elongation at Break, % | 543 | 578 | 638 | 973 | 591 | 380 | 633 | 479 |
| Die C Tear Strength, N/mm | 42.6 | 41 | 37.9 | 47.8 | 36.6 | 36 | 53 | 27 |

**Table 5B**

| | CIMA1 | CIMA2 | CIMA3 | CIMA4 | CIMA5 | CIMA6 |
|---|---|---|---|---|---|---|
| Sh. A Hardness, 10 sec | 87 | 63 | 67.2 | 68.5 | 83 | 51.5 |
| Haze, % | 53.4 | 99.6 | 29.4 | 31 | 23.8 | 28 |
| Haze after aging 55°C for five days | 49.2 | 100 | 38.6 | 50.14 | --- | 24.2 |
| TMA, - 1000 micron, °C | 125 | 71 | 107 | 113 | 111 | 89 |
| Fingerprint | 3 | 1 | --- | --- | --- | --- |
| Tensile Strength, MPa | 11.7 | 5.7 | 6.2 | 6.1 | 10.6 | 4.6 |
| Elongation at Break, % | 660 | 617 | 371 | 346 | 420 | 564 |
| Tear Strength, Die C, N/mm | 67.8 | 35 | 49 | 48 | 71 | 31 |

As shown in Table 5A, the inventive blend compositions have sufficiently low hardness; low haze; and an absence of oil bleed out, as indicated by low haze of the injection molded article after heat aging; as compared to the comparative compositions in Table 5B. Thus, the inventive blend compositions have improved properties as compared to the comparative blend compositions.

### Test Methods

Test methods include the following:
Density (g/cm³) was measured according to ASTM-D 792-03, Method B, in isopropanol.

Specimens were measured in the isopropanol bath at 23°C for 8 min to achieve thermal equilibrium prior to measurement.

Melt index (I₂) was measured at either 190°C or 230°C under a load of 2.16 kg according to ASTM D-1238-03.

Shore A hardness was tested as per ASTM D2240 on a Shore A electric durometer. Weight was applied for 10 seconds.

Haze was measured on 0.32 cm (0.125") thick injection molded plaques according to ASTM D-1003.

DSC crystallization point temperature (T_{c}) is derived from DSC cooling curve.

Heat of fusion is derived from DSC melting curve.

Weight percent crystallinity is measured via Differential Scanning Calorimetry (DSC).

Differential Scanning Calorimetry (DSC) is based on the following. All of the results reported here were generated via a TA Instruments Model Q1000 DSC equipped with an RCS (refrigerated cooling system) cooling accessory and an auto sampler. A nitrogen purge gas flow of 50 ml/min was used throughout. The sample was pressed into a thin film using a press at 175°C, and 10.3 MPa (1500 psi) maximum pressure, for about 15 seconds, then air-cooled to room temperature at atmospheric pressure. About 3 to 10 mg of material was then cut into a 6 mm diameter disk using a paper hole punch, weighed to the nearest 0.001 mg, placed in a light aluminum pan (ca 50 mg), and then crimped shut. The thermal behavior of the sample was investigated with the following temperature profile. The sample was rapidly heated to 180°C, and held isothermal for 3 minutes in order to remove any previous thermal history. The sample was then cooled to -80°C at 10°C/min cooling rate, and was held at -80°C for 3 minutes. The sample was then heated to 180°C at 10°C/min heating rate. The cooling and second heating curves were recorded.

Thermomechanical Analysis (TMA) was conducted on the injection molded samples using a TA Instruments 2940 Themomechanical Analyzer instrument, equipped with a 0.89 mm contact diameter probe. A force of 1 N was applied to a sample approximately 0.51 x 0.51 cm (0.2" x 0.2") cut from the 0.32 cm (0.125") thick injection molded plaque. Testing was initiated at room temperature, and the temperature increased at 5°C/min. The temperature at which the probe penetrated 1000 µm (microns) into the sample was reported.

The tackiness of each injection molded samples was evaluated using a qualitative fingerprint test. The appearance of fingerprints on the surface of injection molded plaques was determined by applying even, firm pressure with the thumb for 5 s to a plaque, after heat aging at 70°C for 7 days. The appearance of a fingerprint was evaluated using the following scale: 1 = no visible fingerprint, 2 = marginally visible fingerprint, and 3 = clearly visible fingerprint.

Tensile testing was conducted according to ASTM D1708. Microtensile specimens were cut from the injection molded plaques.

C-Tear testing was performed according to ASTM D624. C-tear specimens were cut from the injection molded plaques.

## Claims

1. A blend composition suitable for injection molding applications comprising:
(a) from 55 to 65 percent by weight of a propylene/a-olefin interpolymer composition having a DSC melting point (second heat) of less than 80 °C;
(b) from 5 to 25 percent by weight of a homopolymer polypropylene, a random copolymer polypropylene, clarified random copolymer polypropylene, and combination thereof, wherein the homopolymer polypropylene, random copolymer polypropylene and clarified random copolymer polypropylene have a DSC melting point temperature of from greater than 120 °C; and
(c) from 5 to 35 percent by weight of a plasticizing agent;
wherein said blend composition has a total haze of less than 25 percent wherein haze is measured on 0.32 cm (0.125") thick injection molded plaques according to ASTM D-1003; wherein said blend composition further comprises a mold release agent.

2. A process for making an injection molded article comprising the steps of:
(a) selecting from 55 to 65 percent by weight of a propylene/a-olefin interpolymer composition having a DSC melting point (second heat) of less than 80 °C;
(b) selecting from 5 to 25 percent by weight of a homopolymer polypropylene, a random copolymer polypropylene, clarified random copolymer polypropylene, and combination thereof, wherein the homopolymer polypropylene, random copolymer polypropylene and clarified random copolymer polypropylene have a DSC melting point temperature of from greater than 120 °C; and
(c) selecting from 5 to 35 percent by weight of a plasticizing agent; selecting a mold release agent;
(d) contacting said a-c components and said mold release agent in the presence of heat;
(e) thereby forming a blend composition, wherein said blend composition has a total haze of less than 25 percent wherein haze is measured on 0.32 cm (0.125") thick injection molded plaques according to ASTM D-1003; and
(f) forming said blend composition into a molded article.

3. The blend composition of Claim 1, wherein said plasticizing agent has a viscosity in the range of from 12 to 70 mm²/s (cSt) at 40°C, measured according to ASTM D-445.

4. The blend composition of Claim 1, wherein said mold release agent comprises an Oleamide.

5. The blend composition of Claim 4, wherein the Oleamide is 9-Octadecenamide.

6. The blend composition of Claim 4, wherein said Oleamide has the following molecular structure:

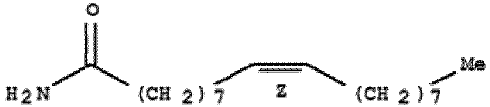

7. The blend composition of Claim 1, wherein the blend composition has a Hardness, Shore A in the range of from 50 to 90.

8. The blend composition of Claim 1, wherein the blend composition has a fingerprint, after aging at 70°C for one week, of 1 or 2.

9. A molded article comprising the blend composition of any one of Claims 1 and 3-8.

10. An article comprising the blend composition of Claim 3 having a haze of less than 25 % after said article being aged in an oven at 55°C, or above, for at least 5 consecutive days, wherein haze is measured on 0.32 cm (0.125") thick injection molded plaques according to ASTM D-1003.

11. The process of making an injection molded article of Claim 2, wherein said mold release agent comprises an Oleamide.

12. The process of making an injection molded article of Claim 2, wherein said plasticizing agent has a viscosity in the range of from 12 to 70 mm²/s (cSt) at 40°C, measured according to ASTM D-445.

## Patentansprüche

1. Eine Mischungszusammensetzung, die für Spritzgussanwendungen geeignet ist, beinhaltend:
(a) zu 55 bis 65 Gewichtsprozent eine Propylen/α-Olefin-Interpolymerzusammensetzung, die einen DSC-Schmelzpunkt (zweite Erwärmung) von weniger als 80 °C aufweist;
(b) zu 5 bis 25 Gewichtsprozent ein Polypropylen-Homopolymer, ein statistisches Polypropylen-Copolymer, geklärtes statistisches Polypropylen-Copolymer und eine Kombination davon, wobei das Polypropylen-Homopolymer, statistische Polypropylen-Copolymer und geklärte statistische Polypropylen-Copolymer eine DSC-Schmelzpunkttemperatur von mehr als 120 °C aufweisen; und
(c) zu 5 bis 35 Gewichtsprozent einen Weichmacher;
wobei die Mischungszusammensetzung eine Gesamttrübung von weniger als 25 Prozent aufweist, wobei Trübung an 0,32 cm (0,125 Zoll) dicken spritzgegossenen Platten gemäß ASTM D-1003 gemessen wird; wobei die Mischungszusammensetzung ferner ein Formtrennmittel beinhaltet.

2. Ein Verfahren zum Herstellen eines spritzgegossenen Artikels, das die folgenden Schritte beinhaltet:
(a) Auswählen von zu 55 bis 65 Gewichtsprozent eine Propylen/α-Olefin-Interpolymerzusammensetzung, die einen DSC-Schmelzpunkt (zweite Erwärmung) von weniger als 80 °C aufweist;
(b) Auswählen von zu 5 bis 25 Gewichtsprozent ein Polypropylen-Homopolymer, ein statistisches Polypropylen-Copolymer, geklärtes statistisches Polypropylen-Copolymer und eine Kombination davon, wobei das Polypropylen-Homopolymer, statistische Polypropylen-Copolymer und geklärte statistische Polypropylen-Copolymer eine DSC-Schmelzpunkttemperatur von mehr als 120 °C aufweisen; und
(c) Auswählen von zu 5 bis 35 Gewichtsprozent einen Weichmacher; Auswählen eines Formtrennmittels;
(d) In-Kontakt-Bringen der Komponenten a-c und des Formtrennmittels in Gegenwart von Wärme;
(e) dadurch Bilden einer Mischungszusammensetzung, wobei die Mischungszusammensetzung eine Gesamttrübung von weniger als 25 Prozent aufweist, wobei Trübung an 0,32 cm (0,125 Zoll) dicken spritzgegossenen Platten gemäß ASTM D-1003 gemessen wird; und
(f) Bilden der Mischungszusammensetzung in einen geformten Artikel.

3. Mischungszusammensetzung gemäß Anspruch 1, wobei der Weichmacher bei 40 °C eine Viskosität im Bereich von 12 bis 70 mm²/s (cSt), gemessen gemäß ASTM D-445, aufweist.

4. Mischungszusammensetzung gemäß Anspruch 1, wobei das Formtrennmittel ein Ölsäureamid beinhaltet.

5. Mischungszusammensetzung gemäß Anspruch 4, wobei das Ölsäureamid ein 9-Octadecenamid ist.

6. Mischungszusammensetzung gemäß Anspruch 4, wobei das Ölsäureamid die folgende Molekülstruktur aufweist:

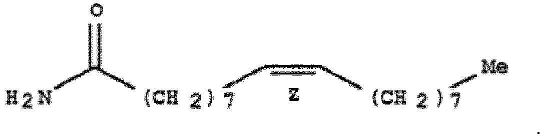

7. Mischungszusammensetzung gemäß Anspruch 1, wobei die Mischungszusammensetzung eine Härte, Shore A, im Bereich von 50 bis 90 aufweist.

8. Mischungszusammensetzung gemäß Anspruch 1, wobei die Mischungszusammensetzung nach dem Altern bei 70 °C über eine Woche einen Fingerabdruck von 1 oder 2 aufweist.

9. Ein geformter Artikel, der die Mischungszusammensetzung gemäß einem der Ansprüche 1 und 3-8 beinhaltet.

10. Ein Artikel, der die Mischungszusammensetzung gemäß Anspruch 3 beinhaltet, mit einer Trübung von weniger als 25 %, nachdem der Artikel in einem Ofen bei 55 °C oder mehr über mindestens 5 aufeinanderfolgende Tage gealtert wurde, wobei die Trübung an 0,32 cm (0,125 Zoll) dicken spritzgegossenen Platten gemäß ASTM D-1003 gemessen wird.

11. Verfahren zum Herstellen eines spritzgegossenen Artikels gemäß Anspruch 2, wobei das Formtrennmittel ein Ölsäureamid beinhaltet.

12. Verfahren zum Herstellen eines spritzgegossenen Artikels gemäß Anspruch 2, wobei der Weichmacher bei 40 °C eine Viskosität im Bereich von 12 bis 70 mm²/s (cSt), gemessen gemäß ASTM D-445, aufweist.

## Revendications

1. Une composition de mélange homogène appropriée pour des applications de moulage par injection comprenant :
(a) de 55 à 65 pour cent en poids d'une composition d'interpolymère propylène/α-oléfine ayant un point de fusion DSC (deuxième chauffe) inférieur à 80 °C ;
(b) de 5 à 25 pour cent en poids d'un polypropylène homopolymère, d'un polypropylène copolymère statistique, d'un polypropylène copolymère statistique clarifié, et d'une combinaison de ceux-ci, où le polypropylène homopolymère, le polypropylène copolymère statistique et le polypropylène copolymère statistique clarifié ont une température de point de fusion DSC partant de plus de 120 °C ; et
(c) de 5 à 35 pour cent en poids d'un agent plastifiant ;
où ladite composition de mélange homogène a un trouble total inférieur à 25 pour cent, le trouble étant mesuré sur des plaques moulées par injection de 0,32 cm (0,125") d'épaisseur selon l'ASTM D-1003 ; où ladite composition de mélange homogène comprend en sus un agent de démoulage.

2. Un procédé pour la réalisation d'un article moulé par injection comprenant les étapes consistant :
(a) à sélectionner de 55 à 65 pour cent en poids d'une composition d'interpolymère propylène/α-oléfine ayant un point de fusion DSC (deuxième chauffe) inférieur à 80 °C;
(b) à sélectionner de 5 à 25 pour cent en poids d'un polypropylène homopolymère, d'un polypropylène copolymère statistique, d'un polypropylène copolymère statistique clarifié, et d'une combinaison de ceux-ci, où le polypropylène homopolymère, le polypropylène copolymère statistique et le polypropylène copolymère statistique clarifié ont une température de point de fusion DSC partant de plus de 120 °C ; et
(c) à sélectionner de 5 à 35 pour cent en poids d'un agent plastifiant ; à sélectionner un agent de démoulage ;
(d) à mettre en contact lesdits constituants a à c et ledit agent de démoulage en présence de chaleur ;
(e) à former de ce fait une composition de mélange homogène, où ladite composition de mélange homogène a un trouble total inférieur à 25 pour cent, le trouble étant mesuré sur des plaques moulées par injection de 0,32 cm (0,125") d'épaisseur selon l'ASTM D-1003 ; et
(f) à former ladite composition de mélange homogène en un article moulé.

3. La composition de mélange homogène de la revendication 1, où ledit agent plastifiant a une viscosité comprise dans l'intervalle allant de 12 à 70 mm²/s (cSt) à 40 °C, mesurée selon l'ASTM D-445.

4. La composition de mélange homogène de la revendication 1, où ledit agent de démoulage comprend un oléamide.

5. La composition de mélange homogène de la revendication 4, où l'oléamide est le 9-octadécénamide.

6. La composition de mélange homogène de la revendication 4, où ledit oléamide a la structure moléculaire suivante :

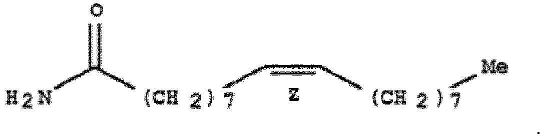

7. La composition de mélange homogène de la revendication 1, où la composition de mélange homogène a une dureté, Shore A, comprise dans l'intervalle allant de 50 à 90.

8. La composition de mélange homogène de la revendication 1, où la composition de mélange homogène a une empreinte, après vieillissement à 70 °C pendant une semaine, de 1 ou 2.

9. Un article moulé comprenant la composition de mélange homogène de l'une quelconque des revendications 1 et 3 à 8.

10. Un article comprenant la composition de mélange homogène de la revendication 3 ayant un trouble inférieur à 25 % après vieillissement dudit article dans un four à 55 °C, ou plus, pendant au moins 5 jours consécutifs, le trouble étant mesuré sur des plaques moulées par injection de 0,32 cm (0,125") d'épaisseur selon l'ASTM D-1003.

11. Le procédé de réalisation d'un article moulé par injection de la revendication 2, où ledit agent de démoulage comprend un oléamide.

12. Le procédé de réalisation d'un article moulé par injection de la revendication 2, où ledit agent plastifiant a une viscosité comprise dans l'intervalle allant de 12 à 70 mm²/s (cSt) à 40 °C, mesurée selon l'ASTM D-445.
